# EUROPÄISCHE PATENTSCHRIFT

(11) **EP 0 823 576 B1**
(45) Veröffentlichungstag und Bekanntmachung des Hinweises auf die Patenterteilung: **08.09.2004**
(21) Anmeldenummer: 97112029.0
(22) Anmeldetag: 15.07.1997
(51) Int. Cl.: F16K 17/06, F16K 17/04

(54) **Hydraulikventil mit Druckbegrenzungs- und Einspeisefunktion**
Hydraulic valve with pressure reduction and feeding function
Soupape hydraulique avec fonction de réduction du pression et d'alimentation

(30) Priorität: 05.08.1996 DE 19631625
(43) Veröffentlichungstag der Anmeldung: 11.02.1998
(73) Patentinhaber: Brueninghaus Hydromatik GmbH, 89275 Elchingen (DE)
(72) Erfinder: Schniederjan, Reinhold, 89233 Neu-Ulm (DE)
(74) Vertreter: Körfer, Thomas, Dipl.-Phys.

(56) Entgegenhaltungen:
- EP-A- 0 327 676
- CH-A- 326 823
- FR-A- 2 253 174
- GB-A- 140 730
- GB-A- 2 175 372
- US-A- 2 770 255
- US-A- 4 223 693

## Beschreibung

Die Erfindung betrifft ein Hydraulikventil mit einer Druckbegrenzungs- und Einspeisefunktion. Ein solches Hydraulikventil findet seine Anwendung z.B. bei einem hydrostatischen Antrieb.

Die Erfindung geht von einem Hydraulikventil mit Druckbegrenzungs- und Einspeisefunktion aus, wie es aus der GB-A-2 175 372 bekannt ist. Einem solchen Hydraulikventil kommen zwei Funktionen zu: Zum einen soll es die Einspeisung in einen Hydraulikkreislauf ermöglichen, wobei das Hydraulikventil dabei als Rückschlagventil arbeitet, um einen Rückfluß von der Hochdruckleitung in die Speiseleitung zu verhindern; zum andern dient das Hydraulikventil als Druckbegrenzungsventil, um den Druck in der Hochdruckleitung auf einen vorgegebenen Maximaldruck zu begrenzen. Bei einem weiteren, aus der DE-AS 28 48 208 bekannten Hydraulikventil werden diese beiden Funktionen dadurch realisiert, daß der Ventilkolben einen Hauptsteuerkolben und einen diesen umfassenden Ringkolben aufweist, wobei der über den Speisedruckanschluß zugeführte Speisedruck im Einspeisefall an dem Ringkolben angreift, um das Ventil zu öffnen. Für die Druckbegrenzungsfunktion weist der Hauptsteuerkolben einen Düseneinsatz auf, so daß sich zwischen der dem Hochdruckanschluß zugewandten Stirnfläche und der dem Hochdruckanschluß abgewandten Stirnfläche des Hauptsteuerkolbens eine Druckdifferenz einstellt, die sich erheblich vergrößert, wenn der in einem Vorsteuerventil anstehende Druck einen einstellbaren Maximaldruck überschreitet. Dabei öffnet das Vorsteuerventil und die dem Hochdruckanschluß abgewandte Stirnfläche des Hauptsteuerkolbens wird unmittelbar mit dem Niederdruck verbunden, so daß die sich einstellende Druckdifferenz den Hauptsteuerkolben von seinem Ventilsitz abhebt und somit das Hauptventil öffnet. Zwar ist bei diesem Hydraulikventil der das Ventil öffnende Maximaldruck durch Vorspannen einer auf den Vorsteuerkegel des Vorsteuerventils einwirkenden Druckfeder über einen von außen zugänglichen Verstellbolzen einstellbar, jedoch weist das Hydraulikventil eine insgesamt relativ aufwendige Konstruktion auf, was einen relativ großen Fertigungsaufwand bedingt.

Andere Druckbegrenzungsventile ohne die vorgenannte Einspeisefunktion sind z.B. aus der DE-PS 847 388 und dem DE-Gbm 66 01 108 bekannt. Auch bei diesen Druckbegrenzungsventilen ist der Maximaldruck, bei welchem die Druckbegrenzungsventile öffnen sollen, mittels einer von außen zugänglichen Verstelleinrichtung einstellbar. Da diese Ventile jedoch die gattungsgemäße Einspeisungsfunktion nicht umfassen, ergeben sich bei der mechanischen Ankopplung der Verstelleinrichtung an den Federteller der Schließfeder, die den Öffnungsdruck vorgibt, keine besonderen konstruktiven Schwierigkeiten. Diese treten jedoch auf, wenn dem Hydraulikventil gleichzeitig die gattungsgemäße Einspeisefunktion zukommen soll und das Ventil daher gleichzeitig als Rückschlagventil ausgebildet sein soll.

Der vorliegenden Erfindung liegt daher die Aufgabe zugrunde, ein Hydraulikventil mit Druckbegrenzungs- und Einspeisefunktion zu schaffen, das einerseits konstruktiv einfach ausgebildet und daher mit geringen Fertigungskosten herstellbar ist, bei dem andererseits jedoch der Maximaldruck, bei welchem das Hydraulikventil entsprechend seiner Druckbegrenzungsfunktion öffnen soll, von außen einstellbar ist.

Die Aufgabe wird durch die Merkmale des Anspruchs 1 gelöst.

Der Erfindung liegt eine Grundkonstruktion zugrunde, bei welcher die Einspeisefunktion dadurch realisiert ist, daß eine Ventileinheit, bestehend aus einem Ventilschließkörper, einem Ventilbolzen, einem mit dem Ventilbolzen verbundenen Federteller und einer zwischen dem Federteller und dem Ventilschließkörper eingespannten ersten Schließfeder im Einspeisefall als vollständige Einheit von einem Ventilsitz axial abhebt. Die von außen zugängliche Verstelleinrichtung ist dabei so mit dem Ventilbolzen verbunden, daß die Verstelleinrichtung einerseits drehfest an dem Ventilbolzen angreift, andererseits jedoch die freie axiale Beweglichkeit des Ventilbolzens gegenüber der Verstelleinrichtung sichergestellt ist. Durch Verdrehen des Ventilbolzens gegenüber dem Federteller kann somit die Vorspannung der den ventilöffnenden Maximaldruck vorgebenden Schließfeder von außen eingestellt werden. Um den Federteller für das Verdrehen des Ventilbolzens zu arretieren und somit ein Mitdrehen des Federtellers zu verhindern, ist erfindungsgemäß eine Arretierungseinrichtung vorgesehen.

Die Ansprüche 2 bis 9 enthalten vorteilhafte Weiterbildungen der Erfindung.

Entsprechend Anspruch 2 kann der Ventilbolzen ein Gewinde aufweisen, das mit einem an dem Federteller ausgebildeten Gegengewinde zusammenwirkt, so daß der Ventilbolzen und der Federteller durch Verdrehen gegeneinander in ihrer axialen Lage zueinander verstellbar sind. Die erfindungsgemäß vorgesehene Arretierungseinrichtung kann entsprechend Anspruch 3 als ein von dem Federteller radial abstehender Stift ausgebildet sein, der in einer Nut in dem den Federteller umgebenden Ventilgehäuse axial geführt sein kann.

Die Verstelleinrichtung kann entsprechend Anspruch 5 einen durch das Ventilgehäuse hindurchragenden Verstellbolzen aufweisen, der mit dem Ventilbolzen drehfest aber axial beweglich verbunden ist. Diese Verbindung kann entsprechend Anspruch 5 dadurch realisiert werden, daß der Verstellbolzen einen Zapfen mit einem Mehrkant-Außenprofll aufweist, der in eine Ausnehmung des Ventilbolzens mit einem entsprechenden Mehrkant-Innenprofil eingreift. Alternativ kann die Verbindung in umgekehrter Weise entsprechend Anspruch 6 dadurch erfolgen, daß der Ventilbolzen einen Zapfen mit einem Mehrkant-Außenventil und der Verstellbolzen eine Ausnehmung mit einem entsprechenden Mehrkant-Innenprofil aufweist, in welche der Zapfen des Ventilbolzens eingreift.

Die Erfindung wird nachfolgend anhand eines Ausführungsbeispiels unter Bezugnahme auf die Zeichnung näher beschrieben. In der Zeichnung zeigt:
- Fig. 1: einen Schnitt durch ein Ausführungsbeispiel eines erfindungsgemäßen Hydraulikventils,
- Fig. 2: die Verwendung zweier erfindungsgemäßer Hydraulikventile entsprechend dem Ausführungsbeispiel nach Fig. 1 in einem hydrostatischen Antrieb.

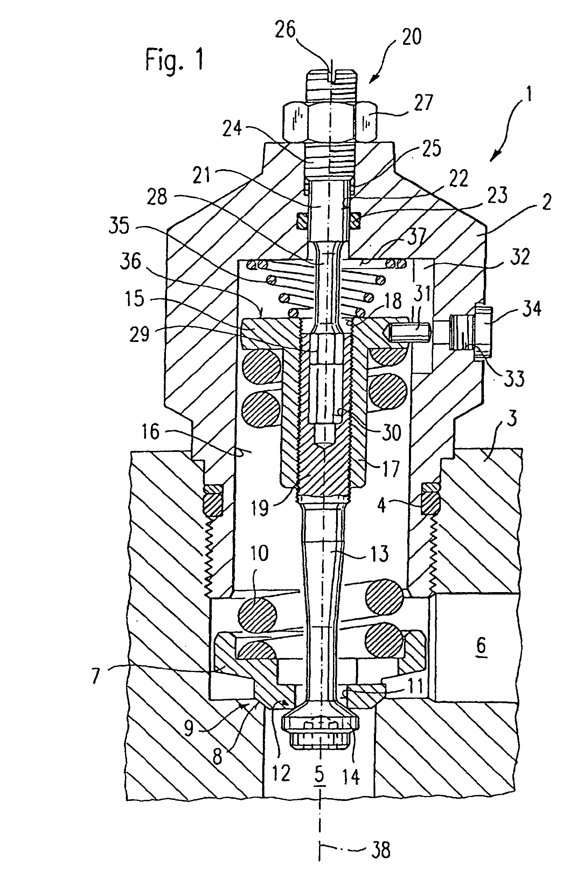

Fig. 1 zeigt ein Ausführungsbeispiel eines erfindungsgemäßen Hydraulikventils mit kombinierter Druckbegrenzungs- und Einspeisefunktion.

Das Hydraulikventil ist allgemein mit dem Bezugszeichen 1 bezeichnet. Ein Ventilgehäuse 2 ist in eine nur schematisch dargestellte Ventilaufnahme 3 eingesetzt bzw. eingeschraubt und mittels eines Dichtrings 4 abgedichtet. In der Ventilaufnahme 3 sind ein Einspeise-Anschluß 5 und ein Arbeitsleitungs-Anschluß 6 ausgebildet, die durch das erfindungsgemäße Hydraulikventil 1 miteinander in Verbindung stehen.

An seinem dem Einspeise-Anschluß 5 zugewandten Ende weist das Hydraulikventil 1 einen Ventilschließkörper 7 auf, an dem eine im Ausführungsbeispiel kegelstumpfförmig ausgebildete Ventilschließfläche 8 ausgebildet ist. Die Ventilschließfläche 8 wirkt mit einem der Ventilschließfläche 8 gegenüberliegenden ersten Ventilsitz 9 zur Ausbildung eines ersten Dichtsitzes zusammen.

Der Ventilschließkörper 7 weist ferner eine Ventilschließkörper-Öffnung 11 auf, die außenseitig von einem zweiten Ventilsitz 12 umgeben ist. Der zweite Ventilsitz 12 wirkt mit einem an einem Ventilbolzen 13 vorgesehenen Schließkopf 14 zur Ausbildung eines zweiten Dichtsitzes zusammen. Im Ausführungsbeispiel erstreckt sich der Ventilbolzen 13 durch die Ventilkörper-Öffnung 11 hindurch, so daß diese von dem Schließkopf 14 außenseitig abgedichtet ist. An seinem dem Schließkopf 14 gegenüberliegenden Ende ist der Ventilbolzen 13 mit einem Federteller 15 verbunden. Eine erste Schließfeder 10 erstreckt sich zwischen dem Federteller 15 und dem Ventilschließkörper 7 so, daß die erste Schließfeder 10 zwischen dem Federteller 15 und dem Ventilschließkörper 7 eingespannt ist. Dadurch wird der Ventilbolzen 13 so vorgespannt, daß dessen Schließkopf 14 dichtend an dem die Ventilkörper-Öffnung 11 umgebenden zweiten Ventilsitz 12 anliegt. Der Ventilbolzen 13, die erste Schließfeder 10 und der Federteller 15 werden von einer Axialbohrung 16 des Ventilgehäuses 2 aufgenommen.

Der Federteller 15 weist einen axialen Schaft 17 auf, in welchem eine axiale Längsbohrung 18 zur Aufnahme eines Verbindungsabschnitts 19 des Ventilbolzens 13 ausgebildet ist. Der Verbindungsabschnitt 19 des Ventilbolzens 13 ist mit einem Außengewinde versehen, das in ein entsprechendes Innengewinde der axialen Längsbohrung 18 des Federtellers 15 eingreift. Die axiale Lage des Federtellers 15 gegenüber dem Ventilbolzen 13 ist daher durch Drehen des Ventilbolzens 13 gegenüber dem Federteller 15 veränderlich, wodurch die Vorspannung der ersten Schließfeder 10 einstellbar ist.

Zum Verändern der Vorspannung der ersten Schließfeder 10 weist das erfindungsgemäße Hydraulikventil 1 eine von außen zugängliche Verstelleinrichtung 20 auf, die im Ausführungsbeispiel als Verstellbolzen 21 ausgebildet ist. Der Verstellbolzen 21 durchdringt eine axiale Bohrung 22 in dem Ventilgehäuse 2 und ist mittels eines Dichtrings 23 abgedichtet. Der Verstellbolzen 21 umfaßt einen Gewindeabschnitt 24 mit einem Außengewinde, das in einem Innengewinde 25 des Ventilgehäuses 2 geführt ist. Der Verstellbolzen 21 kann durch ein geeignetes Werkzeug, das z.B. an einem Schraubenschlitz 26 angreift, in Drehung versetzt werden, wobei die Drehstellung des Ventilbolzens 21 im Ausführungsbeispiel durch eine Kontermutter 27 gesichert ist.

An einem in die Axialbohrung 16 des Ventilgehäuses 2 hineinragenden Abschnitt 28 weist der Verstellbolzen 21 einen Zapfen 29 mit einem Mehrkant-Außenprofil auf. Der Zapfen 29 greift in eine axiale Ausnehmung 30 ein, die an dem dem Schließkopf 14 abgewandten Ende des Ventilbolzens 13 vorgesehen ist. Die Ausnehmung 30 weist ein Mehrkant-Innenprofil auf, das an das Mehrkant-Außenprofil des Zapfens 29 so angepaßt ist, daß durch das Zusammenwirken des Mehrkant-Außenprofils des Zapfens 29 mit dem Mehrkant-Innenprofil der Ausnehmung 30 eine kraftschlüssige Verbindung geschaffen wird, die das auf den Verstellbolzen 21 ausgeübte Drehmoment auf den Ventilbolzen 13 überträgt. In bezüglich der Längsachse 31 des Hydraulikventils 1 axialer Richtung ist der Zapfen 29 jedoch in der Ausnehmung 30 frei beweglich, so daß sich der Ventilbolzen 13 bei der Betätigung des erfindungsgemäßen Hydraulikventils 1 in axialer Richtung frei bewegen kann. Als Mehrkant-Profil eignet sich z.B. ein Sechskant-Profil oder ein Torx-Profil.

Der Federteller 15 ist mittels einer Arretiereinrichtung fixiert, die im Ausführungsbeispiel aus einem von dem Federteller 15 radial abstehenden Stift 31, insbesondere einem Gewindestift, besteht, welcher in einer in dem Ventilgehäuse 2 ausgebildeten Nut 32 in axialer Richtung frei beweglich ist. Auf diese Weise wird verhindert, daß sich der Federteller 15 mitdreht, wenn auf den Ventilbolzen 13 über den Verstellbolzen 21 ein Drehmoment übertragen wird. Der Stift 31 kann über eine durch ein Verschlußelement 34 druckdicht verschließbare Gehäusebohrung 33 von außen zugänglich sein, um zu ermöglichen, daß der Stift 31 in den Federteller 15 nach dem Einsetzen des Federtellers 15 in das Ventilgehäuse 2 eingeführt, insbesondere eingeschraubt wird.

Da der Ventilbolzen 13 mit dem Federteller 15 wie bereits beschrieben über ein Gewinde verbunden ist, bewirkt ein Verdrehen des Ventilbolzens 13 mittels des Verstellbolzens 21 eine relative axiale Lageänderung des Federtellers 15 gegenüber dem Ventilbolzen 13. Auf diese Weise kann die Vorspannung der ersten Schließfeder 10 von außen über ein an der Verstelleinrichtung 20 angreifendes Werkzeug eingestellt werden.

Zwischen der dem Schließkopf 14 abgewandten Stirnfläche 36 des Federtellers 15 und der Stirnfläche 37 der axialen Längsbohrung 16 des Gehäuses 2 ist eine zweite Schließfeder 35 angeordnet, um eine Rückstellkraft auf eine Ventileinheit bestehend aus dem Ventilschließkörper 7, dem Ventilbolzen 13, dem Federteller 15 und der ersten Schließfeder 10 auszuüben.

Nachfolgend wird die Funktion des erfindungsgemäßen Hydraulikventils 1 beschrieben.

Zur Beschreibung der Druckbegrenzungsfunktion wird davon ausgegangen, daß an dem Arbeitsleitungs-Anschluß 6 ein Arbeitsdruck ansteht, der wesentlich größer ist, als der an dem Einspeise-Anschluß 5 anstehende Speisedruck. Die Ventilschließfläche 8 des Ventilschließkörpers 7 liegt daher an dem Ventilsitz 9 dichtend an. Der Schließkopf 14 des Ventilbolzens 13 liegt an dem die Ventilschließkörper-Öffnung 11 umgebenden Ventilsitz 12 aufgrund der von der ersten Schließfeder 10 ausgeübten Vorspannung dichtend an, so daß das erfindungsgemäße Hydraulikventil 1 unterhalb eines vorgebbaren Maximaldrucks geschlossen ist. Der an dem Arbeitsleitungs-Anschluß 6 anstehende Hochdruck wirkt dabei über die Ventilschließkörper-Öffnung 11 auf den Schließkopf 14 ein, so daß der Ventilbolzen 13 von dem Hochdruck in Öffnungsrichtung beaufschlagt wird. Sobald diese in Öffnungsrichtung wirkende Kraftkomponente die von der ersten Schließfeder 10 in schließende Richtung auf den Federteller 15 und somit auf den Ventilbolzen 13 ausgeübte Gegenkraft überschreitet, hebt der Schließkopf 14 von dem zweiten Ventilsitz 12 ab und gibt die Ventilkörper-Öffnung 11 frei. Die an dem Arbeitsleitungs-Anschluß 6 angeschlossene Hochdruckleitung wird somit über das erfindungsgemäße Hydraulikventil 1 zu der an dem Einspeise-Anschluß 5 angeschlossenen Speiseleitung hin entlastet, bis der in der Hochdruckleitung herrschende Hochdruck unter den die Öffnung des Hydraulikventils 1 bewirkenden Maximaldruck abfällt. Der die Öffnung des Hydraulikventils 1 bewirkende Maximaldruck ist von der Vorspannung der ersten Schließfeder 10 abhängig, welche wie vorstehend beschrieben über die Verstelleinrichtung 20 verstellbar ist.

Sofern an dem Arbeitsleitungs-Anschluß 6 die mit Niederdruck beaufschlagte Arbeitsleitung angeschlossen ist, arbeitet das erfindungsgemäße Hydraulikventil 1 entsprechend seiner Einspeisefunktion als Rückschlagventil. Wenn der an dem Einspeise-Anschluß 5 anstehende Speisedruck größer ist als der Druck an dem Arbeitsleitungs-Anschluß 6, öffnet das erfindungsgemäße Hydraulikventil 1, indem die Ventileinheit bestehend aus Ventilschließkörper 7, Ventilbolzen 13, Federteller 15 und erster Schließfeder 10 in axialer Richtung angehoben wird, so daß die Ventilschließfläche 8 des Ventilschließkörpers 7 von dem ersten Ventilsitz 9 abhebt und somit die Verbindung zwischen dem Einspeise-Anschluß 5 und dem Arbeitsleitungs-Anschluß 6 freigibt. Zum Anheben der Einheit aus Ventilschließkörper 7, Ventilbolzen 13, Federteller 15 und erster Schließfeder 10 ist lediglich die relativ geringe von der zweiten Schließfeder 35 ausgeübte Rückstellkraft zu überwinden. Die von der zweiten Schließfeder 35 ausgeübte Rückstellkraft ist erheblich geringer als die von der ersten Schließfeder 10 ausgeübte Schließkraft, so daß das erfindungsgemäße Hydraulikventil 1 in diesem Fall als Rückschlagventil arbeitet. Dadurch wird verhindert, daß Druckfluid aus der an den Arbeitsleitungs-Anschluß 6 angeschlossenen Arbeitsleitung in die an den Einspeise-Anschluß 5 angeschlossene Speiseleitung zurückfließt, wenn der Druck in der Arbeitsleitung den Druck in der Speiseleitung übersteigt.

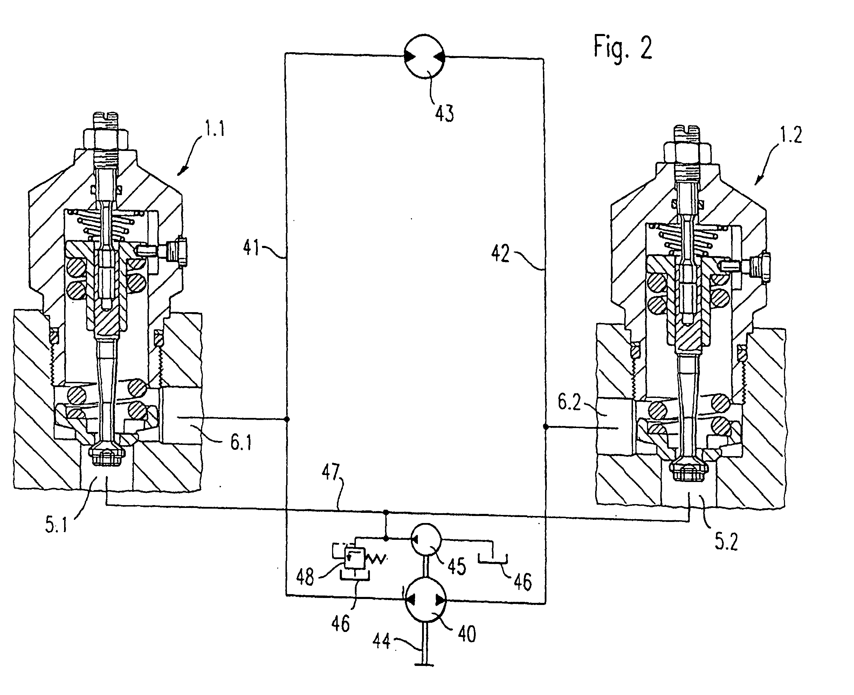

Zur besseren Verdeutlichung wird eine mögliche Verwendung des erfindungsgemäßen Hydraulikventils 1 bei einem hydrostatischen Antrieb anhand von Fig. 2 nachfolgend beschrieben.

Der hydrostatische Antrieb besteht aus einer Hydropumpe 40, die über eine erste Arbeitsleitung 41 und eine zweite Arbeitsleitung 42 mit einem Hydromotor 43 verbunden ist. Die Hydropumpe kann über eine Antriebswelle 44 z.B. von einem nicht dargestellten Verbrennungsmotor angetrieben sein. Über die Antriebswelle 44 wird neben der Hydropumpe 40 auch eine Speisepumpe 45 angetrieben, die Druckfluid aus einem Druckfluid-Tank 46 ansaugt und in eine Speiseleitung 47 einspeist. Zur Druckbegrenzung der Speiseleitung 47 dient ein Druckbegrenzungsventil 48 herkömmlicher Bauart, das die Speiseleitung 47 mit dem Druckfluid-Tank 46 verbindet. Zwischen der ersten Arbeitsleitung 41 und der Speiseleitung 47 ist ein erstes erfindungsgemäßes Hydraulikventil 1.1 angeordnet, während zwischen der zweiten Arbeitsleitung 42 und der Speiseleitung 47 ein zweites erfindungsgemäßes Hydraulikventil 1.2 angeordnet ist. Die in Figur 2 dargestellten Hydraulikventile 1.1 und 1.2 sind entsprechend dem anhand von Figur 1 bereits beschriebenen Ausführungsbeispiel ausgebildet.

Je nach Förderrichtung der Hydropumpe 40 ist eine der Arbeitsleitungen 41, 42 mit Hochdruck beaufschlagt, während die jeweils andere Arbeitsleitung 42, 41 mit Niederdruck beaufschlagt ist. Durch die erfindungsgemäßen Hydraulikventile 1.1 und 1.2 wird sichergestellt, daß die Einspeisung jeweils in die Niederdruck führende Arbeitsleitung 41 oder 42 erfolgt. Die Hydraulikventile 1.1 und 1.2 arbeiten dabei als Rückschlagventile, wobei das mit der Hochdruck führenden Arbeitsleitung 41 bzw. 42 verbundene Hydraulikventil 1.1 bzw. 1.2 sperrt, das jeweils andere Hydraulikventil 1.2 bzw. 1.1 öffnet. Während das mit der Niederdruckleitung verbundene Hydraulikventil 1.1 bzw. 1.2 die Einspeisefunktion übernimmt, übernimmt das jeweils andere Hydraulikventil 1.2 bzw. 1.1 eine Druckbegrenzungsfunktion, um den Druck in der Hochdruck führenden Arbeitsleitung 41 bzw. 42 auf einen durch die Verstelleinrichtung 20 vorgebbaren Maximaldruck zu begrenzen. Überschreitet der Druck in der Hochdruck führenden Arbeitsleitung 41 bzw. 42 diesen Maximaldruck, so entlastet das erfindungsgemäße Hydraulikventil 1.1 bzw. 1.2 die Hochdruck führende Arbeitsleitung 41 bzw. 42 über die Speiseleitung 47 und das Druckbegrenzungsventil 48 zum Druckmitteltank 46 hin. Eine Überlastung der Arbeitsleitungen 41, 42 wird dadurch sicher verhindert.

Die Einstellbarkeit des öffnenden Maximaldrucks ist von erheblichem Vorteil, weil dadurch ein Abgleich der Hydraulikventile nach deren Zusammenbau ermöglicht wird. Ferner können die Hydraulikventile im Betrieb gewartet und der Istwert des Maximaldrucks einem vorgegebenen Sollwert angeglichen werden, ohne daß die Ventile aus den Ventilaufnahmen ausgebaut werden müssen. Die erfindungsgemäßen Ventile sind konstruktiv relativ einfach ausgestaltet und lassen sich daher kostengünstig fertigen.

Die Erfindung ist nicht auf das dargestellte Ausführungsbeispiel begrenzt. Insbesondere ist es auch möglich, einen Zapfen mit einem Mehrkant-Außenprofil an dem Ventilbolzen 13 anzuordnen, der in eine Ausnehmung an dem Verstellbolzen 21 mit einem dem Mehrkant-Außenprofil entsprechenden Mehrkant-Innenprofil eingreift. Ferner kann der Schließkopf auch auf der Innenseite der Ventilschließkörper-Öffnung angeordnet sein und die Ventilschließkörper-Öffnung innenseitig verschließen. Dabei ist jedoch die erste Schließfeder nicht als Druckfeder, sondern als Zugfeder auszubilden.

## Patentansprüche

1. Hydraulikventil mit Druckbegrenzungs- und Einspeisefunktion
mit einem Ventilschließkörper (7), der eine Ventilschließfläche (8), welche zusammen mit einem der Ventilschließfläche (8) gegenüberliegenden ersten Ventilsitz (9) einen ersten Dichtsitz für die Einspeisefunktion bildet, und eine Ventilschließkörper-Öffnung (11) aufweist, die von einem zweiten Ventilsitz (12) umgeben ist, welcher zusammen mit einem an einem axial beweglichen Ventilbolzen (13) ausgebildeten Schließkopf (14) einen zweiten Dichtsitz für die Druckbegrenzungsfunktion bildet,
mit einem Federteller (15),
mit einer zwischen dem Federteller (15) und dem Ventilschließkörper (7) eingespannten ersten Schließfeder (10), die den Ventilbolzen (13) mit seinem Schließkopf (14) gegen den an dem Ventilschließkörper (7) ausgebildeten zweiten Ventilsitz (12) vorspannt,
mit einer zweiten Schließfeder (35), die eine Ventileinheit (7, 13, 15, 10) bestehend aus dem Ventilschließkörper (7), dem Ventilbolzen (13), dem Federteller (15) und der ersten Schließfeder (10) gegen den ersten Ventilsitz (9) vorspannt und
mit einer von außerhalb eines Ventilgehäuses (2) zugänglichen Verstelleinrichtung (20),
**dadurch gekennzeichnet,**
**daß** der Federteller (15) mit dem Ventilbolzen (13) verbunden und mit diesem zusammen axial beweglich ist,
**daß** die Verstelleinrichtung (20) drehfest aber axial frei beweglich an dem Ventilbolzen (13) angreift, um durch Verdrehen des Ventilbolzens (13) gegenüber dem Federteller (15) die Vorspannung der ersten Schließfeder (10) zu verstellen und
**daß** eine Arretierungseinrichtung (31, 32) vorgesehenen ist, um den Federteller (15) drehfest, jedoch axial frei beweglich, zu arretieren.

2. Hydraulikventil nach Anspruch 1,
**dadurch gekennzeichnet,**
**daß** der Ventilbolzen (13) an seinem dem Schließkopf (14) gegenüberliegenden Ende ein Gewinde aufweist, in welches ein an dem Federteller (15) ausgebildetes Gegengewinde eingreift, so daß der Ventilbolzen (13) und der Federteller (15) durch Verdrehen gegeneinander in ihrer axialen Lage zueinander verstellbar sind.

3. Hydraulikventil nach Anspruch 1 oder 2,
**dadurch gekennzeichnet,**
**daß** die Arretierungseinrichtung einen von dem Federteller (15) radial abstehenden Stift (31) umfaßt, der in einer Nut (32) in dem den Federteller (15) umschließenden Ventilgehäuse (2) axial geführt ist.

4. Hydraulikventil nach Anspruch 3,
**dadurch gekennzeichnet,**
**daß** der Stift (31) über eine Gehäusebohrung (33) von außen zugänglich ist.

5. Hydraulikventil nach einem der Ansprüche 1 bis 4,
**dadurch gekennzeichnet,**
**daß** die Verstelleinrichtung (20) einen Verstellbolzen (21) aufweist, der durch das Ventilgehäuse (2) hindurchragt und im Inneren des Ventilgehäuses (2) einen Zapfen (29) mit einem Mehrkant-Außenprofil aufweist, der in eine den Zapfen (29) umschließende Ausnehmung (30) des Ventilbolzens (13) mit einem dem Mehrkant-Außenprofil des Zapfens (29) entsprechenden Mehrkant-Innenprofil eingreift und in der Ausnehmung (30) des Ventilbolzens (13) in axialer Richtung frei beweglich ist.

6. Hydraulikventil nach einem der Ansprüche 1 bis 4,
**dadurch gekennzeichnet,**
**daß** die Verstelleinrichtung (20) einen Verstellbolzen (21) aufweist, der durch das Ventilgehäuse (2) hindurchragt und im Inneren des Ventilgehäuses (2) eine Ausnehmung mit einem Mehrkant-Innenprofil aufweist, in die ein an dem Ventilbolzen (13) ausgebildeter Zapfen mit einem dem Mehrkant-Innenprofil der Ausnehmung des Verstellbolzens (21) entsprechenden Mehrkant-Außenprofil eingreift, wobei der Zapfen des Ventilbolzens (13) in der Ausnehmung des Verstellbolzens (21) in axialer Richtung frei beweglich ist.

7. Hydraulikventil nach Anspruch 6,
**dadurch gekennzeichnet,**
**daß** der Verstellbolzen (21) einen Gewindeabschnitt (24) aufweist, der in einem entsprechenden Gegengewinde (25) des Ventilgehäuses (2) geführt ist.

8. Hydraulikventil nach einem der Ansprüche 1 bis 7,
**dadurch gekennzeichnet,**
**daß** die zweite Schließfeder (35) zwischen der dem Schließkopf (14) abgewandten Stirnfläche (36) des Federtellers (15) und dem Ventilgehäuse (2) eingespannt ist.

9. Hydraulikventil nach einem der Ansprüche 1 bis 8,
**dadurch gekennzeichnet,**
**daß** der Schließkopf (14) an der dem Federteller (15) abgewandten Seite an der Ventilschließkörper-Öffnung (11) dichtend anliegt.

## Claims

1. Hydraulic valve with pressure limiting and feed function
with a valve closing body (7) that has a valve closing surface (8) which together with a first valve seat (9) opposite the valve closing surface (8) forms a first seal seat for the feed function, and a valve closing body orifice (11) that is surrounded by a second valve seat (12) which together with a valve closing head (14) formed on an axially displaceable valve bolt (13) forms a second sealing body for the pressure limiting function,
with a spring plate (15),
with a first closing spring (10) clamped between the spring plate (15) and the valve closing body (7), which spring pretensions the valve bolt (13) with its closing head (14) against the second valve seat (12) formed on the valve closing body (7),
with a second closing spring (35) which pretensions a valve unit (7, 13, 15, 10) comprising the valve closing body (7), the valve bolt (13), the spring plate (15) and the first closing spring (10) against the first valve seat (9), and
with an adjustment device (20) accessible from outside a valve housing (2), **characterised in that**
the spring plate (15) is connected with the valve bolt (13) and is axially displaceable with this,
**in that** the adjustment device (20) engages in a rotationally stationary fashion but axially freely displaceable.on the valve bolt (13) in order, by twisting the valve bolt (13) in relation to the spring plate (15), to adjust the pretension of the first closing spring (10), and **in that** a locking device (31, 32) is provided to lock the spring plate (15) rotationally stationary but axially freely displaceable.

2. Hydraulic valve according to claim 1, **characterised in that** the valve bolt (13) on its end opposite the closing head (14) has a thread in which engages a counter-thread formed on the valve spring plate (15) so that the valve bolt (13) and the spring plate (15) by twisting against each other are adjustable in their axial position in relation to each other.

3. Hydraulic valve according to claim 1 or 2, **characterised in that** the locking device comprises a pin (31) which protrudes radially from the spring plate (15) and is guided axially in a groove (32) in the valve housing (2) surrounding the spring plate (15).

4. Hydraulic valve according to claim 3, **characterised in that** the pin (31) is accessible from the outside via a housing bore (33).

5. Hydraulic valve according to any one of claims 1 to 4, **characterised in that** the adjustment device (20) has an adjustment bolt (21) which protrudes through the valve housing (2) and in the inside of the valve housing (2) has a peg (29) with a polygonal outer profile which engages in a recess (30) of the valve bolt (13) surrounding the peg (29) with a polygonal inner profile corresponding to the polygonal outer profile of the peg (29), and is axially freely displaceable in the recess (30) of the valve bolt (13).

6. Hydraulic valve according to any one of claims 1 to 4, **characterised in that** the adjustment device (20) has an adjustment bolt (21) which protrudes through the valve housing (2) and in the inside of the valve housing (2) has a recess with a polygonal inner profile in which engages a peg formed on the valve bolt (13) with a polygonal outer profile corresponding to the polygonal inner profile of the recess of the adjustment bolt (21), where the peg of the valve bolt (13) is axially freely displaceable in the recess of the adjustment bolt (21).

7. Hydraulic valve according to claim 6, **characterised in that** the adjustment bolt (21) has a thread section (24) which is guided in a corresponding counter-thread (25) of the valve housing (2).

8. Hydraulic valve according to any one of claims 1 to 7, **characterised in that** the second closing spring (35) is clamped between the face (36) of the spring plate (15) facing away from the closing head (14) and the valve housing (2).

9. Hydraulic valve according to any one of claims 1 to 8, **characterised in that** the closing head (14) lies sealing on the valve closing body orifice (11) on the side facing away from spring plate (15).

## Revendications

1. Soupape hydraulique avec fonction de limitation de pression et fonction d'alimentation comprenant:
- un opercule de soupape (7) qui présente une portée de fermeture de soupape (8), laquelle forme un premier siège d'étanchement pour la fonction d'alimentation en coopération avec un premier siège de soupape (9) placé à l'opposé de la portée de fermeture de soupape (8), et une ouverture d'opercule de soupape (11) qui est entourée d'un second siège de soupape (12), lequel forme, conjointement avec une tête de fermeture (14) réalisée sur une tige de soupape (13) mobile axialement, un second siège d'étanchement pour la fonction de limitation de pression ;
- une coupelle de ressort (15) ;
- un premier ressort de fermeture (10) enserré entre la coupelle de ressort (15) et l'opercule de soupape (7), qui précontraint la tige de soupape (13) avec sa tête de fermeture (14) contre le second siège de soupape (12) réalisé sur l'opercule de soupape (7) ;
- un second ressort de fermeture (35) qui précontraint, contre le premier siège de soupape (9), une unité de soupape (7, 13, 15, 10), se composant de l'opercule de soupape (7), de la tige de soupape (13), de la coupelle de ressort (15) et du premier ressort de fermeture (10) ; et
- un dispositif de réglage (20) accessible depuis l'extérieur d'un boîtier de soupape (2),
**caractérisée en ce que** :
- la coupelle de ressort (15) est reliée à la tige de soupape (13) et est mobile axialement conjointement avec celle-ci ;
- le dispositif de réglage (20) attaque la tige de soupape (13) de manière solidaire en rotation, mais mobile librement en sens axial, pour régler la précontrainte du premier ressort de fermeture (10) par rotation de la tige de soupape (13) par rapport à la coupelle de ressort (15) ; et
- il est prévu un dispositif de blocage (31, 32) pour bloquer la coupelle dé ressort (15) de manière solidaire en rotation, mais mobile librement en sens axial.

2. Soupape hydraulique selon la revendication 1, **caractérisée en ce que** la tige de soupape (13) présente un pas de vis sur son extrémité opposée à la tête de fermeture (14), dans lequel s'engage un pas de vis complémentaire réalisé sur la coupelle de ressort (15) de sorte que la tige de soupape (13) et la coupelle de ressort (15) sont réglables dans leur position axiale l'une par rapport à l'autre, par rotation l'une par rapport à l'autre.

3. Soupape hydraulique selon l'une ou l'autre des revendications 1 et 2, **caractérisée en ce que** le dispositif de blocage comprend une goupille (31) qui dépasse radialement de la coupelle de ressort (15) et qui est guidée axialement dans une gorge (32) dans le boîtier de soupape (2) entourant la coupelle de ressort (15).

4. Soupape hydraulique selon la revendication 3, **caractérisée en ce que** la goupille (31) est accessible de l'extérieur via un perçage de boîtier (33).

5. Soupape hydraulique selon l'une des revendications 1 à 4, **caractérisée en ce que** le dispositif de réglage (20) présente un goujon de réglage (21) qui dépasse à travers le boîtier de soupape (2) et qui présente à l'intérieur du boîtier de soupape (2) un tenon (29) présentant un profil extérieur polygonal, qui s'engage dans un évidement (30) de la tige de soupape (13), entourant le tenon (29), avec un profil intérieur polygonal correspondant au profil extérieur polygonal du tenon (29), et qui est mobile librement en direction axiale dans l'évidement (30) de la tige de soupape (13).

6. Soupape hydraulique selon l'une des revendications 1 à 4, **caractérisée en ce que** le dispositif de réglage (20) présente un goujon de réglage (21) qui dépasse à travers le boîtier de soupape (2) et qui présente à l'intérieur du boîtier de soupape (2) un évidement avec un profil intérieur polygonal, dans lequel s'engage un tenon réalisé sur la tige de soupape (13), avec un profil extérieur polygonal correspondant au profil intérieur polygonal de l'évidement du goujon de réglage (21), le tenon de la tige de soupape (13) étant mobile librement en direction axiale dans l'évidement du goujon de réglage (21).

7. Soupape hydraulique selon la revendication 6, **caractérisée en ce que** le goujon de réglage (21) présente un tronçon à pas de vis (24) qui est guidé dans un pas de vis complémentaire correspondant (25) du boîtier de soupape (2).

8. Soupape hydraulique selon l'une des revendications 1 à 7, **caractérisée en ce que** le second ressort de fermeture (35) est enserré entre la surface frontale (36) de la coupelle de ressort (15), ladite surface étant détournée de la tête de fermeture (14), et le boîtier de soupape (2).

9. Soupape hydraulique selon l'une des revendications 1 à 8, **caractérisée en ce que** la tête de fermeture (14) s'applique de manière étanche contre l'ouverture d'opercule de soupape (11) sur le côté détourne de la coupelle de ressort (15).
